# EUROPÄISCHE PATENTANMELDUNG

(11) **EP 0 756 146 A2**
(43) Veröffentlichungstag der Anmeldung: **29.01.1997**
(21) Anmeldenummer: 96111242.2
(22) Anmeldetag: 12.07.1996
(51) Int. Cl.: F26B 25/00

(54) **Extruder für Klärschlamm**

(30) Priorität: 22.07.1995 DE 19526873
(71) Anmelder: Hans Brochier GmbH & Co, D-90482 Nürnberg (DE)
(72) Erfinder: Zhang, Jiansan, Dr.-Ing., 63741 Aschaffenburg (DE); Lammich, Peter, Dipl.-Ing., 63776 Mömbris (DE)
(74) Vertreter: Röhl, Wolf Horst, Dipl.-Phys., Dr.

(57) **Zusammenfassung**

Die Erfindung betrifft einen Extruder für Klärschlamm, umfassend ein langgestrecktes, an eine Klärschlammzuführung (9) angeschlossenes, feststehendes Rohr (1), das mit einer Vielzahl von nebeneinander in Achsrichtung angeordneten Austrittsöffnungen (5) für Klärschlamm versehen ist und ein drehbares, sich in Achsrichtung des Rohrs (1) erstreckendes Ausschubelement aufnimmt, das mit einem Antrieb (4) gekoppelt ist, wobei zum Freihalten der Austrittsöffnungen (5) das Ausschubelement ein frei in dem Rohr (1) drehbarer Abstreifer (15) ist, der über sich in Achsrichtung des Rohrs (1) erstreckende Mitnehmerstangen (11), die mit dem reversierbar ausgebildeten Antrieb (4) gekoppelt sind, in beiden Drehrichtungen mitnehmbar ist.

## Beschreibung

Die Erfindung betrifft einen Extruder für Klärschlamm nach dem Oberbegriff des Anspruchs 1.

Aus WO 92/00250 ist es bekannt, Klarschlamm zwecks Entwässerung mittels eines Extruders Zu extrudieren, wobei der Klärschlamm in Form von relativ dünnen Strängen auf einen Förderer extrudiert wird, der das extrudierte Material unter einer Heizeinrichtung entlang führt, wo es getrocknet wird, um auf diese Weise eine Art würmchenförmiges Granulat zu erzeugen. Wenn man einen gewöhnlichen Extruder verwendet, bei dem das Material mittels einer Förderschnecke durch eine Austrittsdüse gepreßt wird, erhält man nur einen oder wenige Stränge, so daß der Trocknungsvorgang nicht effektiv gestaltet werden kann.

Deshalb wurde versucht, stattdessen ein Extruderrohr vorzusehen, das in Achsrichtung mit einer Vielzahl von nebeneinander angeordneten Austrittsöffnungen versehen ist, um so eine entsprechende Vielzahl von austretenden Strängen aus Klärschlamm zu erhalten, die auf eine relativ große Breite von bis Zu mehreren Metern dicht verteilt sind. Hierbei ist jedoch ein häufiges Verstopfen der Austrittsöffnungen zu beobachten.

Dies liegt zum großen Teil offenbar daran, daß Klarschlamm gewohnlich Haare und gegebenenfalls textile Fasern enthält, die sich im Bereich der Austrittsöffnungen ansammeln, nur zum Teil aus diesen austreten und schließlich zum Verstopfen der Austrittsöffnungen führen.

Aufgabe der Erfindung ist es, einen Extruder für Klärschlamm nach dem Oberbegriff des Anspruchs 1 zu schaffen, bei dem ein Verstopfen der Austrittsöffnungen im wesentlichen vermieden wird.

Diese Aufgabe wird entsprechend dem kennzeichnenden Teil des Anspruchs 1 gelöst.

Im Klärschlamm enthaltene Haare oder Fasern, die sich im Bereich der Austrittsöffnungen ansammeln und teilweise aus diesen herausragen, werden durch einen Abstreifer, der zunächst in einer Richtung gedreht wird, auf die Innenwand des Extruderrohrs gedrückt. Wenn sich genügend Haare oder Fasern angesammelt haben und die Drehrichtung des Abstreifers umgekehrt wird, werden sie von diesem durch die Austrittsöffnung nach außen befördert, so daß die Austrittsöffnung wieder praktisch gänzlich frei wird. Entsprechendes gilt für Plastikschnipsel od. dgl. Material wie Aufreißstreifen von Einhüllfolien von Verpackungen, soweit diese vorher nicht entfernt werden konnten.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt schematisch einen Extruder im Schnitt.

Fig. 2 zeigt einen Schnitt gemäß der Linie II-II von Fig. 1.

Der dargestellte Extruder umfaßt ein langgestrecktes, im wesentlichen horizontal und feststehend angeordnetes Rohr 1, das an einem Ende durch einen Flansch 2 verschlossen ist. Das andere Ende ist durch einen weiteren Flansch 2 abgedichtet verschlossen, der einen Antriebszapfen 3 lagert, der mit einen elektromotorischen Antrieb 4 verbunden ist. Letzterer ist reversierbar ausgebildet und wird im Betrieb in regelmäßigen Zeitabständen zwischen Rechts- und Linksdrehung umgeschaltet.

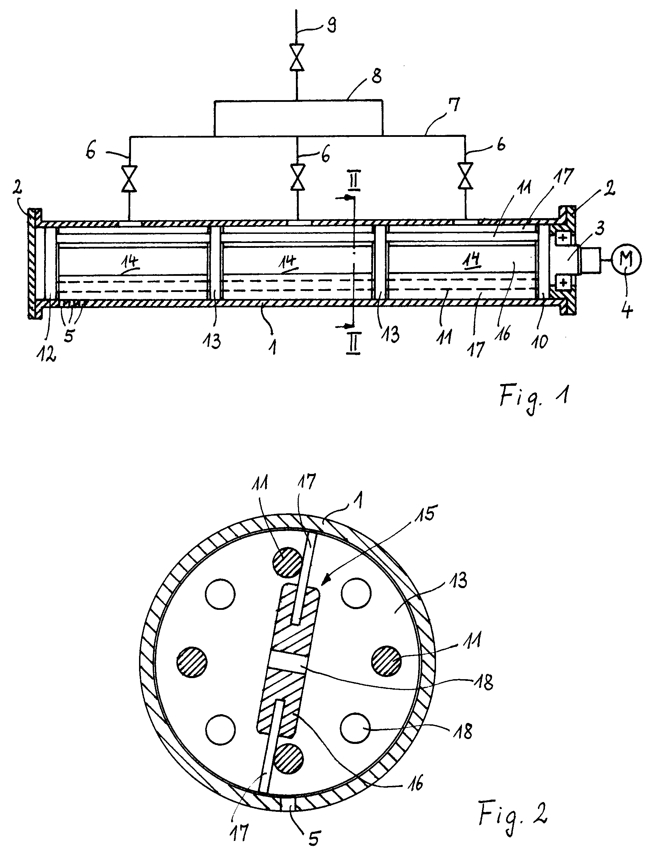

Das Rohr 1 ist an seiner Unterseite mit einer Vielzahl von in geringem Abstand zueinander angeordneten Austrittsöffnungen 5 (in Fig. 1 nur wenige angedeutet) eines Durchmessers gewöhnlich in der Größenordnung von etwa 4 bis 10 mm versehen, während an der Oberseite des Rohrs 1 mehrere absperrbare Zuführleitungen 6 münden. Die Zuführleitungen 6 gehen von einer Verteilerleitung 7 aus, die über einen Rohrbogen 8, d.h. über zwei Zuführstellen, mit einer absperrbaren Klärschlammzuführung 9 derart verbunden ist, daß die gesamte Anordnung einschließ-lich Extruder mittels Wasser spülbar ist und damit gereinigt werden kann.

Der Antriebszapfen 3 trägt eine Scheibe 10 mit einem Außendurchmesser, der etwas Spiel zum Innendurchmesser des Rohrs 1 besitzt. An der Scheibe 10 sind mehrere, beispielsweise vier Mitnehmerstangen 11 (die auch als Rohre ausgebildet sein können) befestigt, die sich axial in dem Rohr 1 erstrecken und benachbart zum geschlossenen Ende des Rohrs 1 mit einer weiteren Scheibe 12 entsprechend der Scheibe 10 verbunden sind.

Außerdem können mehrere, den Scheiben 10 und 12 entsprechende, ebenfalls in Radialebenen angeordnete Scheiben 13 vorgesehen sein, durch die sich die Mitnehmerstangen 11 erstrecken und die das Rohrinnere in mehrere Kammern 14 unterteilen, wobei in jede Kammer 14 eine Zuführleitung 6 mündet.

In jeder Kammer 14 befindet sich ein Abstreifer 15, der sich im wesentlichen über die Länge der Kammer 14 erstreckt. Jeder Abstreifer 15 weist entsprechend dem dargestellten Ausführungsbeispiel einen Halter 16 auf, der zwei Abstreiferleisten 17 tragt, die in einer gemeinsamen Ebene sich vom Halter 16 nach außen erstreckend derart angeordnet sind, daß die Abstreiferkanten nur geringes Spiel zum Innendurchmesser des Rohrs 1 besitzen.

Der jeweilige Abstreifer 15 wird durch die Mitnehmerstangen 11 in einer Richtung mitgenommen und dadurch in dem Rohr 1 gedreht. Wenn Haare od.dgl. in den Bereich einer Austrittsöffnung 5 gelangen, so streicht er darüber hinweg, auch wenn sich eine Ansammlung hiervon bildet. Durch Reversieren der Drehrichtung des Antriebs 4 wird dann der Abstreifer 15 durch die benachbarten Mitnehmerstangen 11 auf der anderen Seite der Abstreifer 15 ergriffen und in entgegengesetzte Richtung gedreht. Dies führt dazu, daß der Abstreifer 15 eine Ansammlung von Haaren od.dgl. anschließend in Richtung auf die Austrittsöffnung 5 und mit Hilfe der durch die Schlammzuführung erzeugten allgemeinen verdrängungsbewegung durch diese hindurch befordert, so daß die Austrittsöffnung 5 nicht verstopfen kann.

Damit sich auf beiden Seiten des Abstreifers 15 sowie in den einzelnen Kammern 14 kein unterschiedlicher Druck aufbauen kann, können der Abstreifer 15 bzw. dessen Halter 16 sowie die Scheiben 13 mit Durchtrittsöffnungen 18 versehen sein.

## Patentansprüche

1. Extruder für Klärschlamm, umfassend ein langgestrecktes, an eine Klarschlammzuführung (9) angeschlossenes, feststehendes Rohr (1), das mit einer Vielzahl von nebeneinander in Achsrichtung angeordneten Austrittsöffnungen (5) für Klärschlamm versehen ist und ein drehbares, sich in Achsrichtung des Rohrs (1) erstreckendes Ausschubelement aufnimmt, das mit einem Antrieb (4) gekoppelt ist, dadurch **gekennzeichnet**, daß das Ausschubelement ein frei in dem Rohr (1) drehbarer Abstreifer (15) ist, der über sich in Achsrichtung des Rohrs (1) erstreckende Mitnehmerstangen (11), die mit dem reversierbar ausgebildeten Antrieb (4) gekoppelt sind, in beiden Drehrichtungen mitnehmbar ist.

2. Extruder nach Anspruch 1, dadurch gekennzeichnet, daß der Abstreifer (15) einen Halter (16) umfaßt, von dem sich zwei in einer Ebene angeordnete Abstreiferleisten (17) nach außen erstrecken.

3. Extruder nach Anspruch 1 oder 2, dadurch gekennzeichnet, daß der Abstreifer (15) im mittleren Bereich mit wenigstens einer Durchtrittsöffnung (18) versehen ist.

4. Extruder nach einem der Ansprüche 1 bis 3, dadurch gekennzeichnet, daß die Mitnehmerstangen (11) wenigstens eine Scheibe (13) tragen, die das Rohr (1) in Kammern (14) unterteilt, wobei in jede Kammer (14) eine Klärschlammzuführungsleitung (6) mündet und in jeder Kammer (14) ein Abstreifer (15) angeordnet ist.

5. Extruder nach Anspruch 4, dadurch gekennzeichnet, daß die Scheibe (13) wenigstens eine Durchtrittsöffnung (18) aufweist.
